# EUROPÄISCHE PATENTSCHRIFT

(11) **EP 2 139 608 B1**
(45) Veröffentlichungstag und Bekanntmachung des Hinweises auf die Patenterteilung: **15.06.2011**
(21) Anmeldenummer: 08717914.9
(22) Anmeldetag: 17.03.2008
(51) Int. Cl.: B05B 15/06

(54) **SPRITZPISTOLEN-LEITUNGSVERBINDUNGSVORRICHTUNG**
SPRAY GUN LINE CONNECTION DEVICE
DISPOSITIF DE RACCORDEMENT DE CONDUITE DE PISTOLET PULVÉRISATEUR

(30) Priorität: 24.03.2007 DE 102007014216
(43) Veröffentlichungstag der Anmeldung: 06.01.2010
(73) Patentinhaber: ITW Oberflächentechnik GmbH, 63128 Dietzenbach (DE)
(72) Erfinder: GRIESENBRUCH, Ulrich, 63150 Heusenstamm (DE)
(74) Vertreter: Meissner, Bolte & Partner
(86) Internationale Anmeldenummer: PCT/EP2008/053179
(87) Internationale Veröffentlichungsnummer: WO 2008/116778

(56) Entgegenhaltungen:
- EP-A- 1 287 901
- EP-A1- 1 514 610
- DE-A1- 19 914 040
- DE-A1-102004 047 923
- DE-U1-202004 007 024

## Beschreibung

Die Erfindung betrifft eine Spritzpistolen-Leitungsverbindungsvorrichtung gemäß dem Oberbegriff von Anspruch 1.

Spritzpistolen dieser Art dienen zum Sprühbeschichten von Gegenständen mit flüssiger Farbe oder flüssigem Lack. Spritzpistolen dieser Art sind beispielsweise aus der EP 1 287 901 B1 bekannt.

Eine Spritzpistolen-Leitungsverbindungsvorrichtung gemäß dem Oberbegriff von Anspruch 1 ist aus der DE 199 14 040 A1 bekannt.

Durch die Erfindung soll die Aufgabe gelöst werden, die Leitungsverbindungsvorrichtung zwischen einem Roboterarm und mindestens einer vom Roboterarm getragenen Spritzpistole zu verbessern.

Diese Aufgabe wird gemäß der Erfindung durch die Merkmale von Anspruch 1 gelöst.

Durch eine Lochplatte lassen sich gemäß der Erfindung folgende Vorteile erzielen: ein guter Schutz der Schlauchanschlussbuchsen vor mechanischen Beschädigungen und vor Schmutz; eine preiswerte und gute Abdichtung, vorzugsweise mittels O-Ringen, auf der Rückseite und auf der Vorderseite der Lochplatte für die Zuführung von flüssiger Farbe oder flüssigem Lack und von einem oder mehreren Luftströmen von dem Paket von Schläuchen im Roboterarm zu mindestens einer Spritzpistole, welche von dem Roboterarm getragen wird.

Weitere Merkmale der Erfindung sind in den Unteransprüchen enthalten.

Durch die erfindungsgemäße Unterbringung von Dichtungen in Vertiefungen, z.B. Ringnuten oder Bohrungsabsätzen, der Lochplatte wird auf einfache Weise eine exakte Positionierung der Dichtungen erzielt.

Durch die erfindungsgemäße Befestigung der Lochplatte an einem Roboterflansch oder am Roboterarm ist sie gegen Verlust auch dann gesichert, wenn am Roboterarm keine Spritzpistole befestigt ist.

Eine Spritzpistole oder ein Zwischenkörper, mittels welch letzterem eine oder mehrere Spritzpistolen mit dem Roboterarm verbindbar sind, kann am Roboterarm, am Roboterflansch oder an der Lochplatte befestigt werden, je nach Zweckmäßigkeit in der praktischen Anwendung der Erfindung.

Gemäß einer besonderen Ausführungsform der Erfindung sind die Buchsenkragen von Schlauchanschlussbuchsen nicht wie beim Stand der Technik mit einem mehreckigen, zum Beispiel sechseckigen, Außenumfang versehen, sondern mit einem kreisrunden Außenumfang. Dadurch sind kleinere Abstände zwischen den Flanschlöchern und damit auch zwischen den Schläuchen möglich. Die kreisrunde Form der Buchsenkragen erleichtert den Einbau und den Ausbau der Schläuche, da die radial überstehenden Buchsenkragen in jeder beliebigen Drehrichtung positionierbar sind, ohne mit benachbarten Buchsenkragen zu kollidieren. Dadurch ist auch die Verwendung von größeren Maßtoleranzen möglich.

Die Erfindung wird im Folgenden mit Bezug auf die beiliegenden Zeichnungen anhand von einer bevorzugten Ausführungsform als Beispiel beschrieben. In den Zeichnungen zeigen
- Fig. 1: eine perspektivische Darstellung einer automatischen Spritzpistole, welche an einem Roboterarm befestigt ist,
- Fig. 2: eine perspektivische Explosionsdarstellung des Endabschnittes des Roboterarmes mit einem sich aus ihm heraus erstreckenden Paket von Schläuchen und einer Lochplatte,
- Fig. 3: eine perspektivische vordere Stirnansicht des Roboterarmes mit der daran befestigten Lochplatte, welche die in den Roboterarm zurückgeschobenen Schlauchenden zudeckt,
- Fig. 4: eine vordere Stirnansicht des Roboterarmes von Fig. 3,
- Fig. 5: einen abgebrochenen Längsschnitt des Roboterarmes in der radialen Ebene V-V von Fig. 4,
- Fig. 6: einen Endabschnitt eines Schlauches von Fig. 2 mit einer auf ihn aufgesteckten Schlauchanschlussbuchse, welche mit dem Schlauch verbunden ist, beispielsweise mit dem Schlauch verklemmt ist.

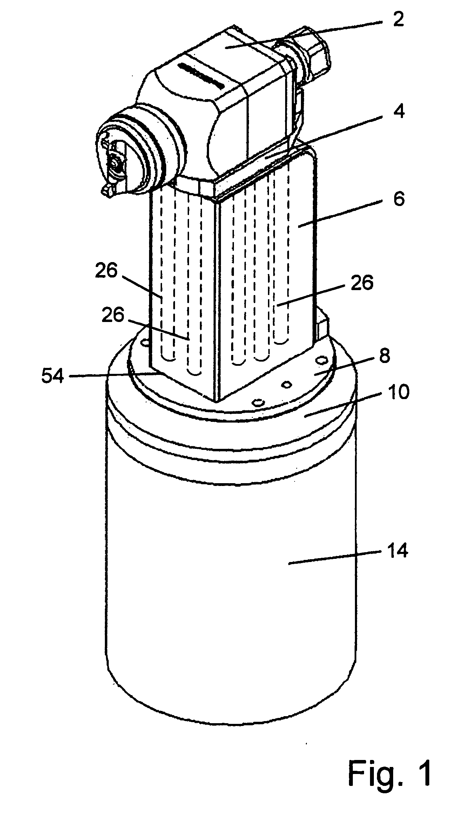

Fig. 1 zeigt eine automatische Spritzpistole 2 zum Sprühbeschichten von Gegenständen mit flüssiger Farbe oder Lack. Die Spritzpistole 2 ist über eine Zwischenplatte 4 an einem Adapter 6 befestigt, welcher einen Adapterflansch 8 aufweist. Der Adapterflansch 8 ist mittels Schrauben (nicht gezeigt) an einem Roboterflansch 10 befestigt, welcher einteilig oder mehrteilig sein kann und mittels Schrauben 12 an einem rohrförmigen Endabschnitt eines Roboterarmes 14 befestigt ist. Zur Versorgung der Spritzpistole mit flüssiger Farbe oder flüssigem Lack und mit einem oder mehreren Luftströmen, beispielsweise einem Luftstrom zur Zerstäubung der Farbe oder des Lackes und/oder einem Luftstrom zur Formung des versprühten Flüssigkeitsstrahles und/oder eines Luftstromes zur Betätigung eines die Farbe oder den Lack steuernden Ventils, ist eine Vielzahl von Schläuchen 20 erforderlich, welche sich durch den Roboterarm 14 erstrecken.

Gemäß der Erfindung ist eine neue Vorrichtung für die Verbindung der Vielzahl von Schläuchen 20 am Ende des rohrartigen Roboterarmes 14 mit Bohrungen 26 in dem Adapter 6 vorgesehen. Der Adapter 6 ist ein Zwischenkörper in einer mechanischen Verbindung, welcher bei der dargestellten Ausführungsform aus dem Adapter 6 und der Zwischenplatte 4 besteht. Gemäß einer anderen Ausführungsform könnte anstelle von Adapter 6 und Zwischenplatte 4 nur ein einziges Zwischenelement vorgesehen sein oder sowohl Zwischenplatte 4 als auch Adapter 6 weggelassen werden und die Spritzpistole 2 direkt an dem Roboterflansch 10 befestigt werden, in welch letzterem Falle ein Gehäuse der Spritzpistole 2 selbst als Zwischenkörper zwischen den Schläuchen 20 des Roboterarmes 14 und den internen Leitungen der Spritzpistole 2 dient.

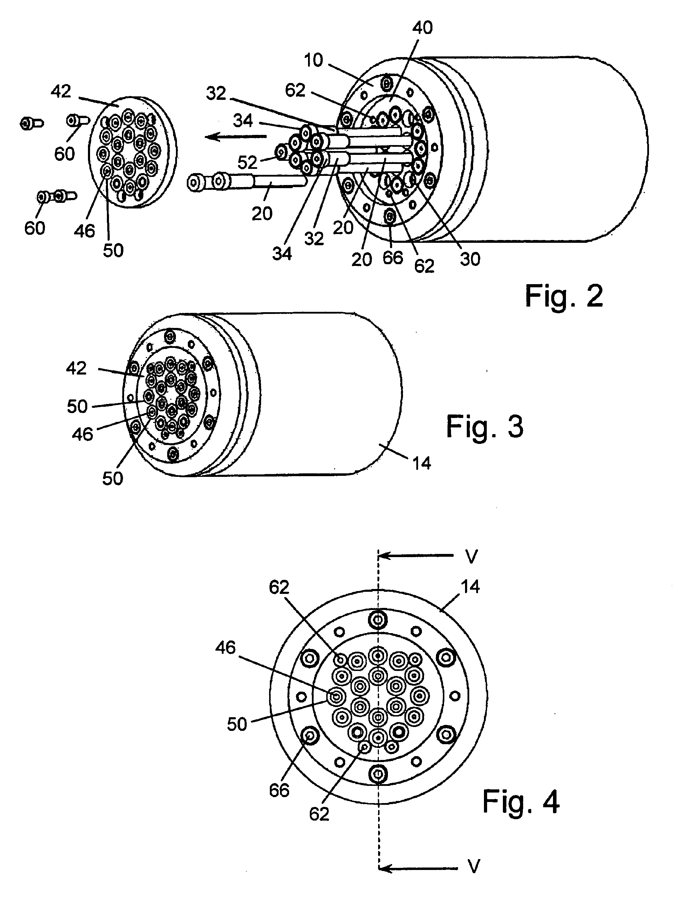

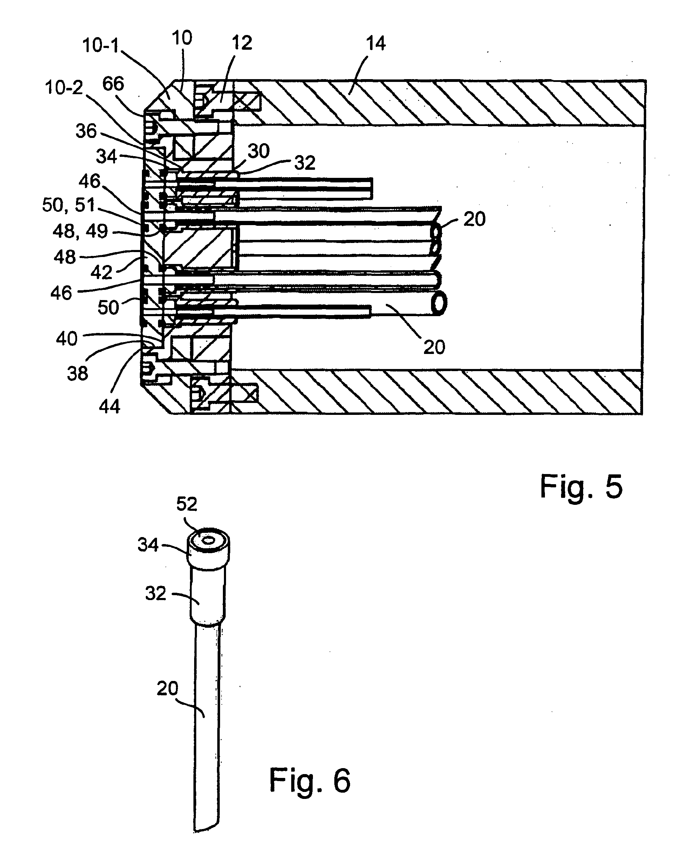

Wie die Figuren 2 bis 5 zeigen, ist der Roboterflansch 10 mit einer Vielzahl von Flanschlöchern 30 versehen, in welchen jeweils eine Schlauchanschlussbuchse 32 steckt, die jeweils mit dem Schlauchende eines der Schläuche 20 zusammengesteckt ist und jeweils mit einem radial überstehenden Buchsenkragen 34 an der vorderen Flanschfläche 36 anliegt. Wie insbesondere Fig. 5 zeigt, kann der Roboterflansch 10 mehrteilig ausgebildet sein und beispielsweise einen einteiligen oder mehrteiligen Flanschring 10-1 und eine am Flanschring 10-1 befestigte und zentral zu ihm angeordnete Flanschplatte 10-2 aufweisen. Die Flanschlöcher 30 sind in der Flanschplatte 10-2 gebildet und die vordere Flanschfläche 36, an welcher die überstehenden Buchsenkragen 34 anliegen, ist jeweils ein nach vorne zeigender Bohrungsabsatz einer Bohrungserweiterung der Flanschlöcher 30. Die überstehenden Buchsenkragen 34 der Schlauchanschlussbuchsen 32 sind in der stirnseitigen Bohrungserweiterung der Flanschlöcher 30 jeweils vollständig versenkt angeordnet.

Die Flanschplatte 10 hat auf ihrer nach vorne zeigenden Stirnseite eine, vorzugsweise zylindrische, Vertiefung 38 mit einer nach vorne zeigenden Grundfläche 40. Die Buchsenkragen 34 sind in die Grundfläche 40 versenkt, so dass sie nicht aus der Grundfläche nach vorne hinausragen, sondern mit ihr vorzugsweise fluchtend enden.

Gemäß der Erfindung ist in der Vertiefung 38 eine Lochplatte 42 angeordnet, welche mit der nach vorne zeigenden Stirnfläche 44 der Flanschplatte 10-2 in Radialrichtung vorzugsweise fluchtet.

Die Lochplatte 42 erstreckt sich radial über die Buchsenkragen 34 von allen Schlauchanschlussbuchsen 32. In der Lochplatte 42 ist eine Vielzahl von Durchgangslöchern 46 gebildet, die mit mindestens einigen der Flanschlöcher 30 und damit auch mit den Schlauchkanälen der Schläuche 20, und auch mit den benachbarten Enden der Bohrungen 26 im Adapter 6 axial fluchtend angeordnet sind.

An beiden Lochenden der Durchgangslöcher 46 der Lochplatte 42 ist jeweils eine ringförmige Dichtung 48 bzw. 50 angeordnet, welche das betreffende Durchgangsloch 46 umgibt.

Die Dichtungen 48 auf der hinteren Plattenseite liegen jeweils dichtend an einer vorderen Stirnfläche 52 einer Schlauchanschlussbuchse 32 dichtend an oder sind im demontierten Zustand der Leitungsverbindungsvorrichtung derart angeordnet, dass sie anlegbar sind.

Die Dichtungen 50 auf der vorderen Flanschseite liegen jeweils dichtend gegen eine hintere Stirnwand 54 des Adapters 6 (Fig. 1) an, wobei jede Dichtung 50 jeweils das Bohrungsende einer der im Adapter 6 gebildeten Bohrungen 26 dichtend umgibt.

Die Dichtungen 48 und 50 sind vorzugsweise in ringförmige Vertiefungen 49 bzw. 51 der Lochplatte 42 eingesetzt, aus welchen sie, zumindest im nicht-montierten Zustand der Leitungsverbindungsvorrichtung, aus der Lochplatte 42 etwas axial hervorragen.

Die Lochplatte 42 ist mittels Schrauben 60 in Gewindebohrungen 62 der Flanschplatte 10-2 befestigt.

Die Flanschplatte 10-2 ist beispielsweise mittels Schrauben 66 an dem Flanschring 10 befestigt.

Wie Fig. 2 zeigt, können die Schläuche 20 durch die Flanschlöcher 30 nach vorne herausgezogen werden, dann an ihren Enden mit den Schlauchanschlussbuchsen 32 versehen werden, und anschließend wieder in den Roboterarm 14 zurückgesteckt werden, wobei die Flanschanschlussbuchsen 32 in die Flanschlöcher 30 gesteckt werden.

## Patentansprüche

1. Spritzpistolen-Leitungsverbindungsvorrichtung für die Verbindung von einer Vielzahl von Leitungsmitteln (20) am Ende eines rohrartigen Roboterarmes (14), durch welchen sich die Leitungsmittel (20) erstrecken, mit Bohrungen (26) in einem Zwischenkörper (6, 4), welcher in einer mechanischen Verbindung zwischen dem Roboterarm (14) und mindestens einer automatischen Spritzpistole (2) angeordnet ist, wobei der Roboterarm (14) am Ende einen Roboterflansch (10) aufweist, der an ihm befestigt ist und eine Vielzahl von Flanschlöchern (30) aufweist, wobei zwischen dem Roboterflansch (10) und dem Zwischenkörper (6, 4) eine Lochplatte (42) angeordnet ist, die sich quer über Leitungsmittelanschlussbuchsen (32) erstreckt und eine Vielzahl von Durchgangslöchern (46) aufweist, die mit mindestens einigen der Flanschlöcher (30) fluchtend angeordnet sind; dass an beiden Lochenden der Durchgangslöcher (46) jeweils eine ringförmige Dichtung (48, 50) angeordnet ist, welche das betreffende Durchgangsloch (46) umgibt;
dass die Dichtungen (48) auf der hinteren Plattenseite jeweils gegen eine Stirnfläche einer der Leitungsmittelanschlussbuchsen (32) dichtend anliegen oder anlegbar sind; dass die Dichtungen (50) auf der vorderen Flanschseite jeweils gegen eine hintere Stirnwand des Zwischenkörpers (6, 4), jeweils um eine von einer Vielzahl von im Zwischenkörper (6, 4) gebildeten Zwischenkörperbohrungen (26) herum, anliegen oder anlegbar sind, welch letztere mit mindestens einigen der Durchgangslöcher (46) der Lochplatte (42) fluchtend angeordnet sind,
**dadurch gekennzeichnet,**
**dass** die Leitungsmittel Schläuche sind und dass der Roboterflansch (10) in seiner nach vorne zeigenden Stirnfläche (44) eine zylindrische Vertiefung (38) aufweist, in welcher die Lochplatte (42) so angeordnet ist, dass sie mit der Stirnfläche (44) fluchtet, und dass in der Vielzahl der Flanschlöcher (30) jeweils eine Schlauchanschlussbuchse (32) steckt, die jeweils mit dem Schlauchende eines der Schläuche (20) verbunden ist und jeweils mit einem radial überstehenden Buchsenkragen (34) an einer vorderen Flanschfläche (36) anliegt, wobei die Buchsenkragen (34) einen kreisrunden Außenumfang haben.

2. Spritzpistolen-Leitungsverbindungsvorrichtung nach Anspruch 1,
**dadurch gekennzeichnet,**
**dass** die ringförmigen Dichtungen (48, 50) der Lochplatte (42) jeweils in einer Vertiefung (49, 51) der Lochplatte (42) positioniert sind.

3. Spritzpistolen-Leitungsverbindungsvorrichtung nach einem der vorhergehenden Ansprüche,
**dadurch gekennzeichnet,**
**dass** die Lochplatte (42) an dem Roboterflansch (10) befestigt oder befestigbar ist, vorzugsweise wieder lösbar befestigt oder wieder lösbar befestigbar ist.

## Claims

1. Spray-gun line-connecting device for the connection of a multiplicity of pipe means (20) to the end of a tubular robot arm (14), through which the pipe means (20) extend, with bores (26) in an intermediate element (6, 4), which is arranged in a mechanical connection between the robot arm (14) and at least one automatic spray gun (2), the robot arm (14) having a robot flange (10) on the end, which flange is fastened to the robot arm and has a multiplicity of flange holes (30), wherein a perforated plate (42) is arranged between the robot flange (10) and the intermediate element (6, 4), which perforated plate extends transversely over pipe means connecting sockets (32) and has a multiplicity of through-holes (46), which are arranged in line with at least some of the flange holes (30); wherein at both ends of the through-holes (46) there is respectively arranged an annular seal (48, 50), which surrounds the through-hole (46) concerned; wherein the seals (48) on the rear plate side respectively lie or can be laid in a sealing manner against an end face of one of the pipe means connecting sockets (32); wherein the seals (50) on the front flange side respectively lie or can be laid against a rear end wall of the intermediate element (6, 4), in each case around one of a multiplicity of intermediate element bores (26) formed in the intermediate element (6, 4), which bores are arranged in line with at least some of the through-holes (46) of the perforated plate (42), **characterized**
**in that** the pipe means are tubes and in that the robot flange (10) has a cylindrical depression (38) in its forwardly pointing end face (44), in which depression the perforated plate (42) is arranged such that it is in line with the end face (44), and in that a respective tube connecting socket (32) is inserted in the multiplicity of flange holes (30), which tube connecting socket is respectively connected to the end of one of the tubes (20) and respectively lies with a radially protruding socket collar (34), against a front flange face (36), the socket collars (34) having a circular outer circumference.

2. Spray-gun line-connecting device according to Claim 1,
**characterized**
**in that** the annular seals (48, 50) of the perforated plate (42) are respectively positioned in a depression (49, 51) in the perforated plate (42).

3. Spray-gun line-connecting device according to either of the preceding claims,
**characterized**
**in that** the perforated plate (42) is fastened or can be fastened to the robot flange (10), preferably is or can be fastened in such a way that it can be released again.

## Revendications

1. Dispositif de raccordement de conduite de pistolet pulvérisateur pour le raccordement d'une pluralité de moyens de conduite (20) à l'extrémité d'un bras de robot de type tubulaire (14), à travers lequel s'étendent les moyens de conduite (20), comprenant des alésages (26) dans un corps intermédiaire (6, 4) qui est disposé dans un raccord mécanique entre le bras de robot (14) et au moins un pistolet pulvérisateur automatique (2), le bras de robot (14) présentant à l'extrémité une bride de robot (10) qui est fixée sur lui et qui présente une pluralité de trous de bride (30), une plaque perforée (42) étant disposée entre la bride de robot (10) et le corps intermédiaire (6, 4), laquelle s'étend transversalement par-dessus des douilles de raccordement des moyens de conduite (32) et présente une pluralité de trous traversants (46) qui sont disposés en affleurement avec au moins certains des trous de bride (30) ; un joint d'étanchéité de forme annulaire (48, 50) étant à chaque fois disposé aux deux extrémités des trous traversants (46), lequel entoure le trou traversant concerné (46) ; les joints d'étanchéité (48) s'appliquant ou pouvant être appliqués hermétiquement sur le côté arrière de la plaque à chaque fois contre une face frontale de l'une des douilles de raccordement des moyens de conduite (32) ; les joints d'étanchéité (50) sur le côté de bride avant s'appliquant ou pouvant être appliqués à chaque fois contre une paroi frontale arrière du corps intermédiaire (6, 4), à chaque fois autour d'un parmi une pluralité d'alésages de corps intermédiaire (26) formés dans le corps intermédiaire (6, 4), ces derniers étant disposés en affleurement avec au moins certains des trous traversants (46) de la plaque perforée (42),
**caractérisé en ce que**
les moyens de conduite sont des tuyaux flexibles et **en ce que** la bride de robot (10) présente, dans sa face frontale (44) tournée vers l'avant, un renfoncement cylindrique (38) dans lequel est disposée la plaque perforée (42) de telle sorte qu'elle soit en affleurement avec la face frontale (44), et **en ce que** dans la pluralité des trous de bride (30) est à chaque fois enfichée une douille de raccordement de tuyau flexible (32) qui est à chaque fois connectée à l'extrémité de tuyau flexible de l'un des tuyaux flexibles (20) et qui s'applique à chaque fois avec un col de douille saillant radialement (34) contre une face de bride avant (36), les cols de douille (34) ayant une périphérie extérieure ronde circulaire.

2. Dispositif de raccordement de conduite de pistolet pulvérisateur selon la revendication 1,
**caractérisé en ce que**
les joints d'étanchéité de forme annulaire (48, 50) de la plaque perforée (42) sont à chaque fois positionnés dans un renfoncement (49, 51) de la plaque perforée (42).

3. Dispositif de raccordement de conduite de pistolet pulvérisateur selon l'une quelconque des revendications précédentes,
**caractérisé en ce que**
la plaque perforée (42) est fixée ou peut être fixée sur la bride de robot (10), de préférence est fixée ou peut être fixée de manière desserrable.
